# EUROPÄISCHE PATENTSCHRIFT

(11) **EP 0 849 332 B1**
(45) Veröffentlichungstag und Bekanntmachung des Hinweises auf die Patenterteilung: **05.07.2006**
(21) Anmeldenummer: 97122287.2
(22) Anmeldetag: 17.12.1997
(51) Int. Cl.: C08L 83/04, C08L 83/06, C08L 83/08, C09D 183/04, C09D 183/06, C09D 183/08, C04B 41/49

(54) **Verfahren zur Herstellung von Überzügen auf Substraten und ein Beschichtungsmaterial hierzu**
Process for the production of coatings on substrates and a coating material therefor
Procédé de fabrication des rêvetements sur substrats et une composition de rêvetement correspondante

(30) Priorität: 20.12.1996 DE 19653480
(43) Veröffentlichungstag der Anmeldung: 24.06.1998
(73) Patentinhaber: Fraunhofer-Gesellschaft zur Förderung der angewandten Forschung e.V., 80686 München (DE)
(72) Erfinder: Amberg-Schwab, Sabine, Dr., 97250 Erlabrunn (DE); Rose, Klaus, Dr., 97318 Kitzingen (DE)

(56) Entgegenhaltungen:
- EP-A- 0 675 128
- EP-A- 0 716 127
- EP-A- 0 716 128
- EP-A- 0 761 675
- DE-A- 3 828 098
- DE-A- 4 025 215
- US-A- 5 073 195
- US-A- 5 137 573

## Beschreibung

Die Erfindung betrifft ein Verfahren zur Herstellung von Überzügen auf Substraten, bei dem ein Beschichtungsmaterial, erhalten durch hydrolytische Kondensation von Silanen, wobei bei der Hydrolyse und/oder anschließend der entstehende Alkohol quantitativ entfernt wird, eingesetzt wird. Die Erfindung betrifft weiterhin ein entsprechendes Beschichtungsmaterial.

Der wachsende Markt von lösungsmittelarmen und -freien Beschichtungssystemen ist in den letzten Jahren hauptsächlich darauf zurückzuführen, daß mit den weitergehenden Erkenntnissen über die Toxizität von Lösungsmitteln eine verstärkte Nachfrage nach lösungsmittelfreien Systemen eintrat. Lösungsmittel verursachen beim Menschen Hautreizungen; eingeatmete Dämpfe wirken auf Blut- und Nervensystem, ebenso wie auf Nieren und Leber. Bei der Herstellung, Verarbeitung und Lagerung muß aufgrund der leichten Entzündbarkeit und der Explosionsgefahr auf erhöhte Sicherheit geachtet werden.

Aus den genannten Gründen ist man deshalb bestrebt, den Anteil an organischen Lösungsmitteln in Lacksystemen möglichst gering zu halten. Aus dieser Notwendigkeit heraus haben sich in den letzten Jahren verschiedene Ansätze und Lösungsmöglichkeiten für lösungsmittelfreie Überzüge herauskristallisiert. So werden zum einen lösungsmittelarme feststoffreiche Lacke angeboten, zum anderen Pulverlacke, strahlungshärtende Lacke und sogenannte Wasserlacke.

Bei den Wasserlacken wird dabei nach der Art der Stabilisierung der Bindemittel in der wäßrigen Phase zwischen wasserlöslichen Systemen, kolloiden Lösungen, Dispersionen und Emulsionen unterschieden (Dr. Klaus Dören, Dr. Werner Freitag, Dr. Dieter Stoye; Technische Akademie Wuppertal, Wasserlacke: Umweltschonende Alternativen für Beschichtungen, Köln, 1992).

Aus dem Stand der Technik sind auch schon seit langer Zeit reine anorganische silikathaltige wäßrige Lösungen in Form von sogenannten Wasserglaslösungen bekannt. Diese Alkalisilikatlösungen enthalten neben den Metall-und Hydroxylionen monomere, linear-polymere, vezweigtpolymere sowie cyclische Silikatanionen. Die Wasserglaslösungen sind stark alkalisch bei pH 10-11; sie sind luft- und kohlensäureempfindlich. Der Feststoffanteil liegt je nach Zusammensetzung bei ca. 25-55 %. Wasserglaslösungen kommen bisher im Bautenschutz und nach Zusatz von anorganischen Farbpigmenten als Färbemittel zum Einsatz, wobei aufgrund der stark alkalischen Eigenschaften nur eine begrenzte Auswahl an Farbpigmenten geeignet ist.

Auch sind aus dem Stand der Technik bereits Dispersionen von Kieselsäureestern bekannt, die in Lösungsmitteln, wie Ethanol, Isopropanol oder Ethoxyethanol oder in deren Gemischen mit Ketonen, Ethern oder Estern verwendet werden. Solche rein anorganische Hydrolysatlösungen weisen einen Feststoffanteil von ca. 20 % SiO₂ auf. Aufgrund ihres anorganischen Charakters kommen diese Systeme vielfach als Korrosionsschutzbeschichtungen, gegebenenfalls unter Zusatz von Zinkstaub zum Einsatz.

Auch sind bereits organisch modifizierte Siloxane als Lösungen in Alkohol oder Wasser vor allem als Oberflächenmodifizierungsmittel oder Haftvermittler bekannt geworden (Informationsschrift der Hüls AG, DYNASILAN-Anwendungen von organofunktionellen Silanen). Die Wirkungsweise erklärt sich aus der Zusammensetzung der verwendeten monomeren Verbindungen des Typs R'Si(OR)₃. Die Alkoxygruppen OR bilden bei Wasserzusatz Si-OH-Gruppen aus, die mit OH-Gruppen anorganischer Oberflächen Wasserstoffbrückenbindungen oder unter Kondensation und Wasserabspaltung chemische Bindungen ausbilden. Der organische Rest R' kann entweder nicht reaktive organische Funktionen enthalten, die die Oberfläche modifizieren (z.B. hydrophob) oder reaktive Methacryl-, Vinyl- oder Epoxidgruppen, die mit Beschichtungssystemen gleicher Natur reagieren können und deren Haftung verbessern. Typische Vorbehandlungssysteme auf Organoalkoxysilanbasis werden durch Lösen des Silans in Lösemittel mit definiertem Wasserzusatz oder in Waserüberschuß ohne Lösemittelzusatz hergestellt. In beiden Fällen wird zum Erhalt einer stabilen Lösung der Silangehalt auf max. 5 % begrenzt. Bei sehr schlecht wasserlöslichen Silanen wird entweder mit Tensidzusätzen gearbeitet oder das Silan als Emulsion verwendet.

| Silan | Konzentration | pH-Wert | Klarpunktzeit ¹ | Standziet²⁾ |
|---|---|---|---|---|
| Aminopropyl-triethoxysilan | 2 % | 11 | 1 min | >1 Jahr |
| Methacryloxypropyl-trimethoxysilan | 2 % | 3,5 | 20 min | ca.48 h |
| Glycidoxypropyl-trimethoxysilan | 2 % | 4 | <5 min | ca.10 d |
| Mercaptopropyl-trimethoxysilan | 0,5 % | 3,5 | 30 min | >24 h |
| Vinyltriethoxysilan | 0,5 % | 3,5 | 30 min | ca.5 d |

| | | | | |
|---|---|---|---|---|
| 1) Zeit bis zum Klarwerden einer Mischung von Silan in Wasser | | | | |
| 2) Zeit bis Zur Eintrübung der Lösung | | | | |

Die bisher bekannten wasserbasierenden Si-Systeme sind - wie oben beschrieben - einerseits rein anorganischer Natur und nur in stark alkalischer Form stabil oder weisen einen sehr geringen Feststoffanteil von max. 5 % auf, womit keine mechanisch stabilen Beschichtungen erzielbar sind.

In der DE 38 28 098 A1 sowie der DE 40 25 215 A1 sind Verfahren und Zusammensetzungen zur Herstellung von kratzfesten Materialien beschrieben, die auf der Basis von anorganischen/organischen Hybridpolymeren basieren. Diese Verbindungsgruppe ist nun im Stand der Technik unter dem Namen ORMOCERe bekannt geworden. In einem Übersichtsartikel in "Materials Science Monographs, 67", mit dem Titel "High performance Ceramic films and coatings", edited by P. Vincenzini, im Elsevier-Verlag, Amsterdam-Oxford-New York-Tokyo, 1991, ist diese Verbindungsklasse ausführlich abgehandelt. Derartige Beschichtungssysteme auf wasserhaltiger Basis mit einem für Beschichtungsmaterialien entsprechend hohen Feststoffgehalt sind jedoch bisher noch nicht bekannt geworden.

Aus der EP 0 716 128 A2 und der EP 0 716 127 A2 sind wasserbasierende organopolysiloxanhaltige Zusammensetzungen und ein Verfahren zu deren Herstellung bekannt. Bei diesen organopolysiloxanhaltigen Zusammensetzungen handelt es sich um solche, die Aminoalkylalkoxysilane und Alkyltrialkoxysilane enthalten. Bei diesen wasserbasierenden Systemen ist auch vorgesehen, daß das Wasser aus dem Reaktionssystem entfernt wird.

Die beiden vorstehend erwähnten Offenlegungsschriften verwenden aber ausschließlich Alkyltrialkoxysilane und somit Alkoxysilane die im wesentlichen keine reaktiven Gruppen haben. Die damit erzielbaren Beschichtungen können somit im wesentlichen nicht quer vernetzt werden.

Auch aus der US 5 073 195 sind wäßrige silanenthaltende Zusammensetzungen bekannt. Weiterhin beschreibt die EP 0 761 675 A2 ein Verfahren zur Herstellung von wasserlöslichen organischen Siliziumverbindungen bei denen eine Hydrolyse von Alkyltrialkoxysilanen und Alkoxy enthaltenen Siloxanen durchgeführt wird.

Ausgehend hiervon ist es die Aufgabe der vorliegenden Erfindung, ein Verfahren zur Herstellung von Überzügen auf Substraten und ein entsprechendes Beschichtungsmaterial anzugeben, das auf der Basis von anorganischen/organischen Hybridpolymeren (sog. ORMOCERe) auf Wasserbasis beruhen soll.

Die Aufgabe wird in bezug auf das Verfahren durch die kennzeichnenden Merkmale des Anspruchs 1 und in bezug auf das Beschichtungsmaterial durch die kennzeichnenden Merkmale des Anspruchs 6 gelöst. Die Unteransprüche zeigen vorteilhafte Weiterbildungen auf.

Die Anmelderin konnte überraschenderweise zeigen, daß das Verfahren bei der Herstellung der an und für sich bekannten ORMOCERe so führbar ist, daß der entstehende Alkohol quantitativ aus dem Reaktionssystem entfernt wird. Erfindungsgemäß wird dazu dem Beschichtungsmaterial ein Stabilisator zugesetzt und bei der Hydrolyse und/oder danach, der Alkohol entfernt und durch eine entsprechende Wassermenge ersetzt.

Wesentlich beim Anmeldungsgegenstand ist dabei, daß das System stabil ist und die Entfernung des Alkohols so gesteuert wird, daß bei der Entfernung keine Gelierung oder Ausfällung von unlöslichen Verbindungen stattfindet. Dies wird zum einen durch den Stabilisator ersetzt und zum anderen durch ein schonendes Entfernen des Alkohols. Bevorzugt ist es, wenn eine stufenweise Hydrolyse durchgeführt wird, in der Weise, daß eine hydrolytische Vorkondensation mit einer geringeren Wassermenge als der zur vollständigen Hydrolyse der hydrolysierbaren Gruppen erforderlichen Menge erfolgt, und dann durch Zugabe von weiterem Wasser die Hydrolyse der verbleibenden hydrolysierbaren Gruppen bewirkt wird. Die Entfernung des Alkohols kann dabei auch stufenweise mit oder auch nach der Hydrolyse erfolgen. Vorteilhafterweise wird die Entfernung des Alkohols dabei durch Destillation/Abrotation vorgenommen. Um ein weiteres schonendes Entfernen zu ermöglichen, kann die Destillation auch unter Vakuum vorgenommen werden.

Zusätzlich zu den vorstehenden Maßnahmen wird noch eine Stabilisierung der hydrolysierten Silane und/oder der im Reaktionssystem enthaltenen Metallalkoholatkomponenten durchgeführt. Dazu werden erfindungsgemäß Aminoalkohole als Stabilisatoren eingesetzt. Beispiele für derartige Aminalkohole sind Triethanolamin, Diethanolamin, t-Butylethanolamin, Diethanoiaminpropyltrialkoxysilan oder silanisierte Polyalkohole. Es wird angenommen, daß mit den derartigen Aminalkoholen eine Komplexierung der hydrolysierten Verbindungen stattfindet, so daß dadurch auch eine Stabilisierung bei den jeweiligen Reaktionsschritten erreicht wird.

Aus stofflicher Sicht wird ein Beschichtungsmaterial eingesetzt, das erhalten worden ist durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit, wobei 10 bis 100 Mol-% auf der Basis monomerer Verbindungen der hydrolytisch kondensierbaren Verbindungen Silane der allgemeinen Formel I sind,

Si Xₐ R₄₋ₐ (I)

in der die Reste und Indices gleich oder verschieden sind und folgende Bedeutung haben:
- R =: gegebenenfalls substituiertes Alkyl, Alkenyl, Aryl, Alkylaryl oder Arylalkyl mit 1 bis 50 Kohlenstoff-Atomen, wobei diese Reste durch Sauerstoff- oder Schwefel-Atome, durch Urethan-, Ester-, Carbonyl-, Amid oder Amino-Gruppen unterbrochen sein können;
- X =: Wasserstoff, Halogen, Hydroxy, Alkoxy, Acyloxy, Alkylcarbonyl, Alkoxycarbonyl oder NR'₂, mit R' = Wasserstoff, Alkyl oder Aryl;
- a =: 1, 2 oder 3,
die Erfindung umfaßt jedoch auch alle bisher schon ausdem Stand der Technik bekannt gewordenen organischanorganische Hybridpolymere. Das Verfahren ist mit thermisch aushärtenden Beschichtungsmaterialien mit und ohne Katalysator sowie auch mit photochemisch aushärtenden Materialien mit und ohne Fotoinitiatoren durchführbar. Auf den Offenbarungsgehalt der entsprechenden DE 38 28 098 A1 sowie der DE 40 25 215 A1 wird deshalb ausdrücklich bezug genommen. Die Erfindung umfaßt deshalb auch alle Verfahren, bei denen die in diesen Schriften enthaltenen Stoffkombinationen verwendet werden.

Es hat sich gezeigt, daß bei der Herstellung des Beschichtungsmaterials je nach Hydrophilie der Komponenten der Beschichtungsmaterialien einphasige Lösungen oder zweiphasige stabile Systeme erhalten werden. Zweiphasige Systeme können dabei jederzeit durch geringe Zusätze von Polaritätsvermittlern auch als einphasige Systeme erhalten werden. Derartige Polaritätsvermittler sind z.B. silanisierte Polyglykole, silanisierte Polyalkohole und Saccharide wie Zucker oder Bernsteinsäureanhydridsilan. Es ist dabei ausreichend, wenn der Polaritätsvermittler mit mindestens 0,1 Masse-% zugesetzt wird, bevorzugt 0,2-0,4 Masse-%.

Überraschenderweise hat sich herausgestellt, daß die Eigenschaften der applizierten und ausgehärteten Beschichtungsmaterialien weitgehend denen der vergleichbaren lösungsmittelhaltigen Systeme entsprechen. Auch konnte festgestellt werden, daß derartige ORMOCERe Wasserlacksysteme eine längere Topfzeit als die vergleichbaren lösungsmittelhaltigen Systeme aufweisen.

Die Erfindung betrifft weiterhin ein Beschichtungsmaterial zur Herstellung von Überzügen auf Substraten auf wasserhaltiger Basis mit und ohne Metallalkoholat. Das erfindungsgemäße Beschichtungsmaterial besteht aus einem hydrolytischen Kondensationsprodukt einer oder mehrerer hydrolytisch kondensierbarer Verbindungen des Silicium mit oder ohne Metallalkoholat, wie vorstehend bereits beim Verfahren beschrieben. Das Beschichtungsmaterial enthält Stabilisatoren bevorzugt zur Stabilisierung der hydrolysierten Silane und Metallalkoholatkomponenten. Als Stabilisatoren werden dabei Aminoalkohole wie Triethanolamin, Diethanolamin, t-Butylethanolamin, Diethanolaminopropyltrialkoxysalan oder silanisierte Polyalkohole oder Mischungen davon eingesetzt. Das Beschichtungsmaterial kann auch geeignete Polaritätsvermittler enthalten.

Das erfindungsgemäße Verfahren und das Beschichtungsmaterial weisen zahlreiche Vorteile gegenüber dem Stand der Technik auf. Der Vorteil gegenüber den bisher bekannten Wasserlacken ist hierbei, daß mit dem vorstehend beschriebenen Verfahren und dem Beschichtungsmaterial Lacke mit Feststoffgehalten mit bis über 55 % herstellbar sind, wobei auch bei diesen hohen Feststoffgehalten eine ausgezeichnete Verarbeitbarkeit und Stabilität feststellbar ist. Durch den hohen Feststoffgehalt können auch dicke Schichten (5-10 µm) erhalten werden. Die ausgehärteten Schichten sind zudem sehr abriebbeständig und durch die große Variationsbreite der möglichen Ausgangskomponenten sind auch stabile Mehrkomponentensysteme herstellbar. Damit sind komplexe Anforderungsprofile realisierbar.

Das erfindungsgemäße Herstellungsverfahren und das Beschichtungsmaterial weist auch gegenüber denen aus dem Stand der Technik bekannten ORMOCERe entscheidende Vorteile auf. Das Beschichtungssol ist hierbei lösungsmittelfrei applizierbar und das Beschichtungsmaterial hat eine deutlich höhere Topfzeit als die vergleichbaren Lösungsmittelsysteme. Daraus ergeben sich Vorteile für die Verarbeitung dieser Materialien, wie keine Deklarationspflicht von Lösungsmitteln, keine Lösungsmittelbelastung bei der Verarbeitung, längere Verwendungsmöglichkeit der Beschichtungssohle durch verbesserte Standzeit und geringerer Reinigungsaufwand, der mit dem Beschichtungsmaterial in Kontakt kommenden Geräte.

Die Erfindung wird nachfolgend anhand von drei Ausführungsbeispielen näher erläutert:

Es zeigen:
- Fig. 1:: ein Herstellungsschema für ein wäßriges Al/Zr-4,
- Fig. 2:: ein Herstellungsschema für ein wäßriges Memo (Memo = 3-Methacryloxypropyltrimethoxisilan)/Zr-System, und
- Fig. 3:: ein Herstellungsschema für ein Glymo (Glymo = 3-Glycidoxypropyltrimethoxysilan)/Mi-System.

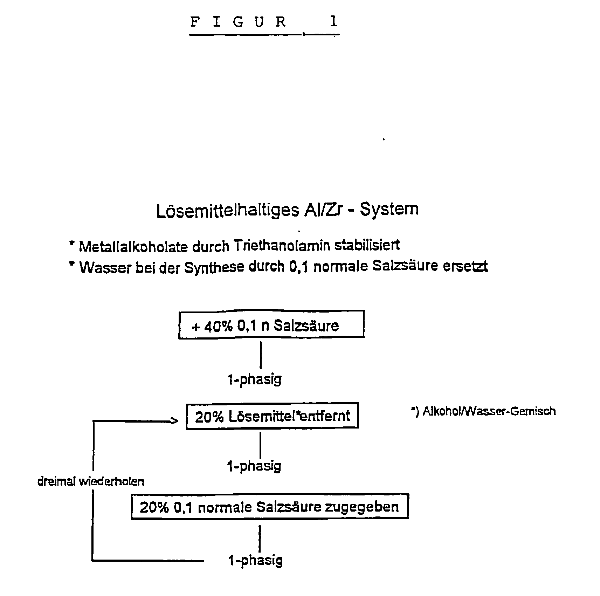

Das wasserbasierende Al/Zr-4-System (Fig. 1) ist ebenso wie das System auf Lösemittelbasis ein homogenes einphasiges System, welches sich sehr gut durch Tauchen, Rakeln oder Walzen applizieren läßt. Ebenso unproblematisch ist die Benetzung sowohl der PC als auch der Bauplatten mit den Systemen. Der Verlauf der Beschichtungsmaterialien war ebenfalls ausgezeichnet.

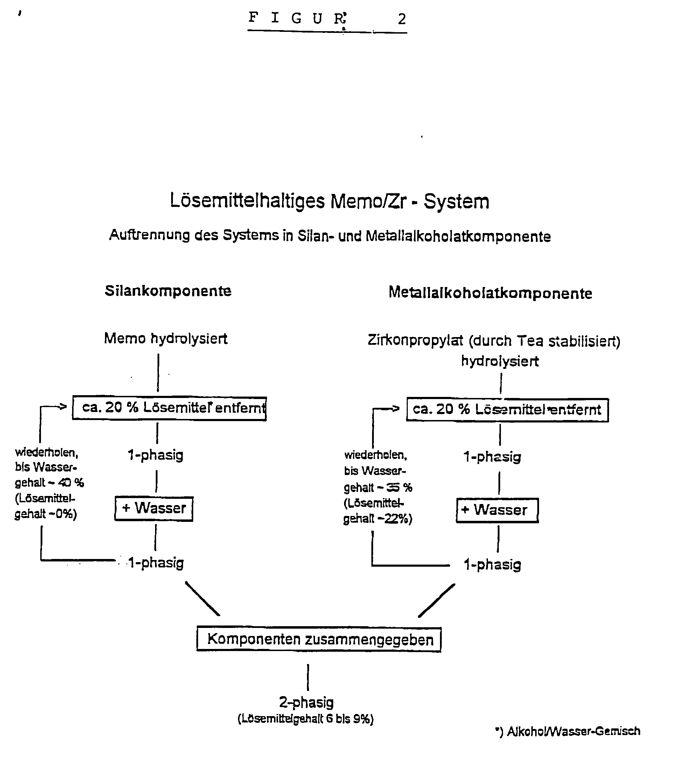

Beide Systeme besitzen sehr gute optische Eigenschaften, z.B. hohe Transparenz und Oberflächenglanz. Analoge Eigenschaften weist auch das System nach Fig. 2 auf.

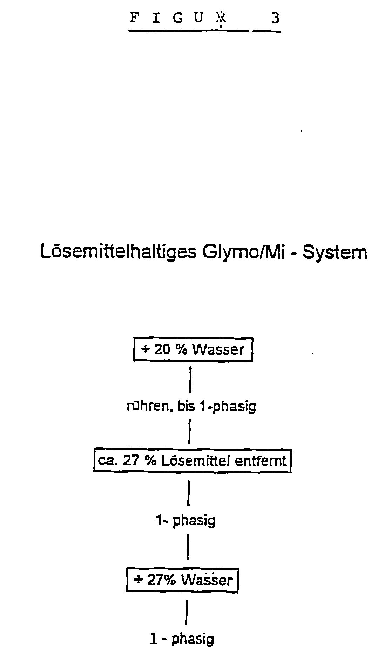

Das System nach Fig. 3 ist ein einphasiges System mit sehr guten optischen Eigenschaften, z.B. hohe Transparenz und Oberflächenglanz. Der Lackverlauf ist ebenfalls gut.

### Ausführungsbeispiele

### 1. Thermisch aushärtendes aluminium- und zirkonalkoholathaltiqes Beschichtungsmaterial

Bestandteile:
0,3 mol Zr(OPr)₄
0,5 mol Triethanolamin
0,3 mol Al(Bu)₃
1,0 mol Tmos (Tmos = Tetramethoxysilan)
1,4 mol Glymo
Wasser wird in gewünschter Menge als 0,1 n HCl-Lösung hinzugegeben.

Die Synthese erfolgt analog bekannter ORMOCER-Synthesen. Den sich bildenden Alkohol (Propanol, Sekundärbutanol, Methanol) destilliert man portionsweise als Azeotrop mit Wasser ab. Die jeweils abdestillierte Menge wird durch 0,1 n HCl-Lösung ersetzt.

### 2. Photochemisch vernetztes zirkonalkoholathaltiqes Beschichtungsmaterial

Bestandteile:
1,0 mol Memo
0,2 mol Zr(OPR)₄
0,18 mol Triethanolamin
1% Irgacure 184
Wasser wird in gewünschter Menge als 0,1 n HCl-Lösung hinzugegeben (siehe oben).

### 3. Thermisch aushärtendes Beschichtungsmaterial ohne Metallalkoholatkomponente

Bestandteile:
1,0 mol Glymo
0,05 mol 1-Methylimidazol
0,5 mol Bernsteinsäureanhydridsilan
Wasser wird in gewünschter Menge als 0,1 n HCl-Lösung hinzugegeben.

| Eigenschaften/Tests | System 1 | System 2 | System 3 |
|---|---|---|---|
| Applikation | problemlos | problemlos | problemlos |
| Haftung DIN 53151 | Gt 0, Gt 0-1 | Gt 0, Gt 0-1 | Gt 0-1, Gt 0 |
| Abriebbeständickeit (ASTM D 1044-85) | 0,6 % , 0,8 % | 1,2 %, 1,4 % | 2,2 %, 2,4 % |
| Schwitzwassertest (DIN -50017 KK) | unbeständig | beständig | beständig |

## Patentansprüche

1. Verfahren zur Herstellung von Überzügen auf Substraten, bei dem ein Beschichtungsmaterial, erhalten durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit, wobei 10 bis 100 Mol-% auf der Basis monomerer Verbindungen der hydrolytisch kondensierbaren Verbindungen Silane der allgemeinen Formel I sind,
Si Xₐ R₄₋ₐ (I)
in der die Reste und Indices gleich oder verschieden sind und folgende Bedeutung haben:
R = gegebenenfalls substituiertes Alkyl, Alkenyl, Aryl, Alkylaryl oder Arylalkyl mit 1 bis 50 Kohlenstoff-Atomen, wobei diese Reste durch Sauerstoff- oder Schwefel-Atome, durch Ur-ethan-, Ester-, Carbonyl-, Amid oder Amino-Gruppen unterbrochen sein können;
X = Wasserstoff, Halogen, Hydroxy, Alkoxy, Acyloxy, Alkylcarbonyl, Alkoxycarbonyl oder NRI" mit RI = Wasserstoff, Alkyl oder Aryl;
a = 1, 2 oder 3,
auf ein Substrat appliziert und ausgehärtet wird,
**dadurch gekennzeichnet , dass**
dem Beschichtungsmaterial zusätzlich Aminoalkohole als Stabilisatoren zur Stabilisierung der hydrolysierten Silane und/oder Metallalkoholat-Komponenten zugesetzt werden und dass während und/oder nach der Hydrolyse der entstehende Alkohol aus dem Reaktionssystem entfernt und durch Wasser ersetzt wird.

2. Verfahren nach Anspruch 1, **dadurch gekennzeichnet, dass** eine stufenweise Hydrolyse durchgeführt wird, in der Weise, dass eine hydrolytische Vorkondensation mit einer geringeren Wassermenge als der zur vollständigen Hydrolyse der hydrolysierbaren Gruppen stöchiometrischen erforderlichen Menge erfolgt, und dass dann durch Zugabe von weiterem Wasser die Hydrolyse der verbliebenen hydrolysierbaren Gruppen bewirkt wird, und dass gleichzeitig und/oder nach dieser stufenweise Hydrolyse die Entfernung der entstehenden Alkohole stufenweise durchgeführt wird.

3. Verfahren nach Anspruch 1 oder 2, **dadurch gekennzeichnet, dass** die Entfernung der Alkohole durch Destillation erfolgt.

4. Verfahren nach mindestens einem der Ansprüche 1 bis 3, **dadurch gekennzeichnet, dass** die Destillation unter Vakuum durchgeführt wird.

5. Verfahren nach mindestens einem der Ansprüche 1 bis 4, **dadurch gekennzeichnet, dass** als Aminoalkohole Triethanolamin, Diethanolamin, t-Butylethanolamin, Diethanolaminpropyltrialkoxysilan oder silanisierte Polyalkohole eingesetzt werden.

6. Beschichtungsmaterial zur Herstellung von Überzügen auf Substraten, **dadurch gekennzeichnet, dass** das Beschichtungsmaterial erhalten worden ist durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit, wobei
10 bis 100 Mol-% auf der Basis monomerer Verbindungen der hydrolytisch kondensierbaren Verbindungen Silane der allgemeinen Formel I sind,
Si Xₐ R₄₋ₐ (I)
in der die Reste und Indices gleich oder verschieden sind und folgende Bedeutung haben:
R = gegebenenfalls substituiertes Alkyl, Alkenyl, Aryl, Alkylaryl oder Arylalkyl mit 1 bis 50 Kohlenstoff-Atomen, wobei diese Reste durch Sauerstoff- oder Schwefel-Atome, durch Urethan-, Ester-, Carbonyl-, Amid oder Amino-Gruppen unterbrochen sein können;
X = Wasserstoff, Halogen, Hydroxy, Alkoxy, Acyloxy, Alkylcarbonyl, Alkoxycarbonyl oder NR'2, mit R' = Wasserstoff, Alkyl oder Aryl;
a = 1, 2 oder 3,
wobei das Beschichtungsmaterial zusätzlich Aminoalkohole als Stabilisatoren zur Stabilisierung der hydrolysierten Silane und/oder der Metallalkoholat-Komponenten enthält und dass bei und/oder nach der Hydrolyse der entstehende Alkohol aus dem Reaktionssystem entfernt und durch eine entsprechende Menge Wasser ersetzt ist.

7. Beschichtungsmaterial nach Anspruch 6, **dadurch gekennzeichnet, dass** eine stufenweise Hydrolyse durchgeführt wird, in der Weise, dass in einem ersten Schritt eine hydrolytische Vorkondensation mit einer geringeren Wassermenge als der zur vollständigen Hydrolyse der hydrolysierbaren Gruppen stöchiometrischen erforderlichen Menge erfolgt, und dass dann durch Zugabe von weiterem Wasser die Hydrolyse der verbliebenen hydrolysierbaren Gruppen bewirkt wird, und dass dabei oder später der entstehende Alkohol entfernt wird.

8. Beschichtungsmaterial nach mindestens einem der Ansprüche 6 oder 7, **dadurch gekennzeichnet, dass** die Aminoalkohole ausgewählt sind aus Triethanolamin, Diethanolamin, t-Butylethanolamin, Diethanolaminpropyltrialkoxysilan und silanisierten Polyalkoholen.

9. Beschichtungsmaterial nach mindestens einem der Ansprüche 6 bis 8, **dadurch gekennzeichnet, dass** zur Stabilisierung zusätzlich Säuren, z.B. Carbonsäuren oder mit H₂O säurefreisetzende Verbindungen wie Anhydride enthalten sind.

10. Beschichtungsmaterial nach mindestens einem der Ansprüche 6 bis 9, **dadurch gekennzeichnet, dass** es zur besseren Mischbarkeit mit Wasser zusätzlich Polaritätsvermittler wie silanisierte Polyglykole, silanisierte Polyalkohole und silanisierte Saccharide, z.B. Zucker, oder Bernsteinsäureanhydridsilan, enthält.

## Claims

1. Method for the production of coatings on substrates, in which a coating material, obtained by hydrolytic condensation of one or more hydrolytically condensable compounds of silicon and possibly other elements from the group B, Al, P, Sn, Pb, the transition metals, the lanthanides and the actinides, and/or precondensates derived from the above-mentioned compounds, possibly in the presence of a catalyst and/or a solvent by the effect of water or moisture, 10 to 100% by mol on the basis of monomer compounds of the hydrolytically condensable compounds being silanes of the general formula I,
Si Xₐ R₄₋ₐ (I)
in which the radicals and indices are the same or different and have the following meaning:
R = possibly substituted alkyl, alkenyl, aryl, alkylaryl or arylalkyl with 1 to 50 carbon atoms, these radicals being able to be interrupted by oxygen or sulphur atoms, by urethane, ester, carbonyl, amide or amino groups;
X = hydrogen, halogen, hydroxy, alkoxy, acyloxy, alkylcarbonyl, alkoxycarbonyl or NRI", with RI = hydrogen, alkyl or aryl;
a = 1, 2 or 3,
is applied on a substrate and cured,
**characterised in that**
amino alcohols are added in addition to the coating material as stabilisers for stabilising the hydrolised silanes and/or metal alcoholate components, and **in that**, during and/or after hydrolysis, the alcohol produced is removed from the reaction system and is replaced by water.

2. Method according to claim 1, **characterised in that** a stepwise hydrolysis is implemented in such a manner that a hydrolytic precondensation is effected with a lower quantity of water than the stoichiometric quantity necessary for complete hydrolysis of the hydrolysable groups, and **in that** then, by addition of further water, hydrolysis of the remaining hydrolysable groups is effected, and **in that**, at the same time and/or after this stepwise hydrolysis, removal of the alcohols produced is implemented in a stepwise manner.

3. Method according to claim 1 or 2, **characterised in that** the removal of the alcohols is effected by means of distillation.

4. Method according to at least one of the claims 1 to 3, **characterised in that** the distillation is implemented under vacuum.

5. Method according to at least one of the claims 1 to 4, **characterised in that** triethanolamine, diethanolamine, t-butylethanolamine, diethanolamine propyltrialkoxysilane or silanised polyalcohols are used as amino alcohols.

6. Coating material for the production of coatings on substrates, **characterised in that** the coating material was obtained by hydrolytic condensation of one or more hydrolytically condensable compounds of silicon and possibly other elements from the group B, Al, P, Sn, Pb, the transition metals, the lanthanides and the actinides, and/or precondensates derived from the above-mentioned compounds, possibly in the presence of a catalyst and/or a solvent by the effect of water or moisture,
10 to 100% by mol on the basis of monomer compounds of the hydrolytically condensable compounds being silanes of the general formula I,
Si Xₐ R₄₋ₐ (I)
in which the radicals and indices are the same or different and have the following meaning:
R = possibly substituted alkyl, alkenyl, aryl, alkylaryl or arylalkyl with 1 to 50 carbon atoms, these radicals being able to be interrupted by oxygen or sulphur atoms, by urethane, ester, carbonyl, amide or amino groups;
X = hydrogen, halogen, hydroxy, alkoxy, acyloxy, alkylcarbonyl, alkoxycarbonyl or NR'2, with R' = hydrogen, alkyl or aryl;
a = 1, 2 or 3,
the coating material containing in addition amino alcohols as stabilisers for stabilising the hydrolised silanes and/or the metal alcoholate components, and **in that**, during and/or after hydrolysis, the alcohol produced is removed from the reaction system and is replaced by a corresponding quantity of water.

7. Coating material according to claim 6, **characterised in that** a stepwise hydrolysis is implemented in such a manner that, in a first step, a hydrolytic precondensation is effected with a lower quantity of water than the stoichiometric quantity necessary for complete hydrolysis of the hydrolysable groups, and **in that** then, by addition of further water, hydrolysis of the remaining hydrolysable groups is effected, and **in that** the alcohol produced is removed at the same time or later.

8. Coating material according to at least one of the claims 6 or 7, **characterised in that** the amino alcohols are selected from triethanolamine, diethanolamine, t-butylethanolamine, diethanolamine propyltrialkoxysilane and silanised polyalcohols.

9. Coating material according to at least one of the claims 6 to 8, **characterised in that**, for stabilisation, acids, e.g. carboxylic acids or compounds which release acids with H₂O, such as anhydrides, are contained in addition.

10. Coating material according to at least one of the claims 6 to 9, **characterised in that**, for better miscibility with water, it contains in addition polarity agents, such as silanised polyglycols, silanised polyalcohols and silanised saccharides, e.g. sugar, or succinic anhydride silane.

## Revendications

1. Procédé de production de revêtements sur des substrats, selon lequel on applique sur un substrat et on durcit un matériau de revêtement, obtenu par condensation hydrolytique d'un ou plusieurs composé(s) hydrolytiquement condensable(s) du silicium et, le cas échéant, d'autres éléments appartenant au groupe B, Al, P, Sn, Pb, des métaux de transition, des lanthanides et des actinides, et/ou de pré-condensats dérivés des composés ci-dessus cités, le cas échéant en présence d'un catalyseur et/ou d'un solvant, par action d'eau ou d'humidité, dont 10 à 100 moles % sur la base des composés monomères des composés hydrolytiquement condensables sont des silanes répondant à la formule 1,
SiXₐ R₄₋ₐ (I)
dans laquelle les restes et indices sont identiques ou différents et ont la signification suivante :
R = alkyle, alcényle, aryle, alkylaryle ou arylalkyle, le cas échéant substitués, comportant 1 à 50 atome(s) de carbone, ces restes pouvant être interrompus par des atomes d'oxygène ou de soufre, par des groupes uréthane, ester, carbonyle, amide ou amino ;
X = hydrogène, halogène, hydroxy, alcoxy, acyloxy, alkylcarbonyle, alcoxycarbonyle ou NR'₂ avec R' = hydrogène, alkyle ou aryle ;
a = 1, 2 ou 3,
**caractérisé en ce que**
pour la stabilisation des silanes hydrolysés et/ou des composants alcoolates métalliques on ajoute en outre à la matière de revêtement des aminoalcools en tant que stabilisants et, pendant et/ou après l'hydrolyse, on élimine du système réactionnel l'alcool formé et on le remplace par de l'eau.

2. Procédé selon la revendication 1,
**caractérisé en ce qu'**
on effectue une hydrolyse par étapes, consistant à effectuer une pré-condensation hydrolytique avec une quantité d'eau inférieure à la quantité stoechiométrique nécessaire pour l'hydrolyse complète des groupes hydrolysables, et à hydrolyser ensuite les groupes hydrolysables restants par ajout d'une quantité supplémentaire d'eau, puis à effectuer par étapes, pendant et/ou après cette hydrolyse par étapes, l'élimination de l'alcool formé.

3. Procédé selon la revendication 1 ou 2,
**caractérisé en ce que**
l'élimination des alcools a lieu par distillation.

4. Procédé .selon au moins l'une des revendications 1 à 3,
**caractérisé en ce que**
la distillation est effectuée sous vide.

5. Procédé selon au moins l'une des revendications 1 à 4,
**caractérisé en ce que**
comme aminoalcools, on utilise la triéthanolamine, la diéthanolamine, la t-butyléthanolamine, le diéthanolaminepropyltrialcoxysilane ou des polyalcools silanés.

6. Matière de revêtement pour la production de revêtements sur des, substrats,
**caractérisée en ce que**
la matière de revêtement est obtenue par condensation hydrolytique d'un ou plusieurs composé(s) hydrolytiquement condensable(s) du silicium et, le cas échéant, d'autres éléments du groupe B, Al, P, Sn, Pb, des métaux de transition, des lanthanides et des actinides et/ou de pré-condensats dérivés des composés ci-dessus cités, le cas échéant en présence d'un catalyseur et/ou d'un solvant par action d'eau ou d'humidité,
10 à 100 moles % sur la base des composés monomères des composés hydrolytiquement condensables sont des silanes répondant à la formule générale I,
SiXₐR₄₋ₐ (I)
dans laquelle les restes et indices sont identiques ou différents et ont la signification suivante :
R = alkyle, alcényle, aryle, alkylaryle ou arylalkyle, le cas échéant substitués, comportant 1 à 50 atome(s) de carbone, ces restes pouvant être interrompus par des atomes d'oxygène ou de soufre, par des groupes uréthane, ester, carbonyle, amide ou amino ;
X = hydrogène, halogène, hydroxy, alcoxy, acyloxy, alkylcarbonyle, alcoxycarbonyle ou NR'₂, avec R' = hydrogène, alkyle ou aryle ;
a = 1, 2 ou 3,
la matière de revêtement contient en outre des amino-alcools en tant que stabilisants pour la stabilisation des silanes hydrolysés et/ou des composants alcoolates métalliques, et pendant et/ou après l'hydrolyse, l'alcool formé est éliminé du système réactionnel et remplacé par une quantité d'eau correspondante.

7. Matière de revêtement selon la revendication 6,
**caractérisée en ce qu'**
on effectue une hydrolyse par étapes, consistant à effectuer dans une première étape une pré-condensation hydrolytique avec une quantité d'eau inférieure à la quantité stoechiométrique nécessaire pour l'hydrolyse complète des groupes hydrolysables, et ensuite à hydrolyser les groupes hydrolysables restants par ajout d'une quantité supplémentaire d'eau puis à effectuer par étapes pendant ou après cette hydrolyse l'élimination de l'alcool formé.

8. Matière de revêtement selon au moins l'une des revendications 6 ou 7,
**caractérisée en ce que**
les amino-alcools sont choisis parmi la triéthanolamine, la diéthanolamine, la t-butyléthanolamine, le diéthanolaminepropyltrialcoxysilane et des polyalcools silanés.

9. Matière de revêtement selon au moins l'une des revendications 6 à 8,
**caractérisée en ce que**
pour la stabilisation, elle contient en outre des acides, comme par exemple des acides carboxyliques ou des composés libérant des acides avec H₂O comme les anhydrides.

10. Matière de revêtement selon au moins l'une des revendications 6 à 9,
**caractérisée en ce que**
pour améliorer la miscibilité avec l'eau, elle contient en outre des agents de polarité comme des polyglycols silanés, des polyalcools silanés et des saccharides silanés, par exemple des sucres ou le silane d'anhydride de l'acide succinique.
